# EUROPEAN PATENT APPLICATION

(11) **EP 2 592 046 A1**
(43) Date of publication of application: **15.05.2013**
(21) Application number: 11803611.0
(22) Date of filing: 06.07.2011
(51) Int. Cl.: C01B 3/48, H01M 8/06

(54) **APPARATUS AND PROCESS FOR CARBON MONOXIDE SHIFT CONVERSION, AND HYDROGEN PRODUCTION EQUIPMENT**

(30) Priority: 06.07.2010 JP 2010153531
(71) Applicant: Renaissance Energy Research Corporation, Kyoto 6018116 (JP)
(72) Inventor: OKADA Osamu, Kyoto-shi Kyoto 6018114 (JP); NAKAYAMA, Maiko, Kyoto-shi Kyoto 6018114 (JP); MORIMOTO, Kaori, Osaka-shi Osaka 541-0043 (JP); ITO, Chihiro, Kyoto-shi Kyoto 6018114 (JP); NAGAOKA, Katsutoshi, Oita-shi Oita 870-1192 (JP)
(74) Representative: Treeby, Philip David William
(86) International application number: PCT/JP2011/065428
(87) International publication number: WO 2012/005277

(57) **Abstract**

A shift conversion catalyst layer is divided into at least two front and back stages. A first catalyst and a second catalyst are provided on the upstream side and the downstream side, respectively. The first catalyst has a property that a carbon monoxide conversion rate decreases with an increase in carbon dioxide concentration in a supplied reaction gas at a constant carbon monoxide concentration in the supplied reaction gas and a constant reaction temperature. The first catalyst is combined with the second catalyst such that the degree of decrease in carbon monoxide conversion rate with respect to an increase in carbon dioxide concentration in the supplied reaction gas in the second catalyst is lower than that in the first catalyst. Whereby, the conversion rate of a carbon monoxide concentration of a carbon monoxide shift conversion apparatus can be improved without increasing the used amount of a shift conversion catalyst.

## Description

### TECHNICAL FIELD

The present invention relates to an apparatus and a method for carbon monoxide shift conversion, in which carbon monoxide and water vapor contained in a reaction gas are reacted and thereby converted into carbon dioxide and hydrogen.

### BACKGROUND ART

In recent years, the development of clean energy such as fuel cells has been actively developed, and there is a growing need for the production of high-purity hydrogen as a fuel source for fuel cells, etc. As the hydrogen fuel, a reformed gas is used which is obtained by reforming a hydrocarbon, an alcohol, or the like, and the reformed gas contains therein carbon monoxide on the order of 10% and carbon dioxide besides hydrogen. In the case of polymer electrolyte fuel cells which operate at low temperatures at 100°C or less, platinum catalysts for use in electrodes are poisoned with carbon monoxide contained in the reformed gas, and there is thus a need to lower the carbon monoxide concentration to 100 ppm or less, preferably 10 ppm or less.

In order to remove the carbon monoxide in the reformed gas down to 10 ppm or less, the carbon monoxide concentration is lowered to 1% or less by a carbon monoxide shift reaction (water gas shift reaction) in which carbon monoxide and water vapor are reacted, and thereby converted to carbon dioxide and hydrogen, and subsequently, the carbon monoxide concentration is further lowered to 10 ppm or less by supplying a minute amount of oxygen (air) for selective oxidation of the carbon monoxide with the use of a platinum-based catalyst or the like. In the downstream step, the amount of oxygen supplied is increased when the upstream carbon monoxide concentration is higher after the carbon monoxide shift reaction, and the hydrogen in the reformed gas is oxidized unnecessarily. Thus, there is a need to sufficiently lower the carbon monoxide concentration in the upstream carbon monoxide shift reaction.

The carbon monoxide shift reaction is an equilibrium reaction (exothermic reaction) as represented by the following chemical formula 1, and the composition is moved to the right-hand side at low temperatures. Therefore, the lowered reaction temperature is advantageous for the conversion of carbon monoxide, but has the problem of a decrease in reaction rate. In addition, when the conversion of carbon monoxide (the reaction to the right-hand side) is progressed, the reaction is inhibited by restriction on chemical equilibrium. Therefore, a large amount of shift conversion catalyst is required in order to sufficiently lower the carbon monoxide concentration. The need for a large amount of shift conversion catalyst leads to a requirement of time for heating the catalyst, which is disincentive to the reduction in converter size and the request for saving the start-up time, and problematic, in particular, in reforming systems for hydrogen stations, household fuel cell systems, etc.

(Chemical Formula 1) CO + H₂O → H₂ + CO₂

While the carbon monoxide shift reaction is developed as a one-stage reaction in some cases, the technique of dividing a catalyst layer and cooling the catalyst layer in the middle thereof is commonly used in order to yield an advantageous gas composition, due to the fact that the temperature is increased with the progress of the reaction because the carbon monoxide shift reaction is an exothermic reaction as described above (see, for example, Non-Patent Document 1 and paragraphs [0002] to [0006] of Patent Document 1 below). In this case, as for the shift conversion catalysts, a copper-zinc-based catalyst, a copper-chromium-based catalyst, or the like, which is able to be used at 150°C to 300°C, is used as the downstream catalyst for middle temperatures and lower temperatures, whereas an iron-chromium-based catalyst or the like, which functions at 300°C or more, is used as the catalyst for higher temperatures. The copper-based shift conversion catalyst, in particular, the copper-zinc-based catalyst is more advantageous than the catalyst for higher temperatures in that the shift conversion reaction is possible at low temperatures of 150°C to 300°C, and in terms of carbon monoxide conversion rate, and advantageous in cost in that expensive materials such as noble metals are not used, and thus used widely in not only fuel cells but also hydrogen production processes. On the other hand, the active species of the copper-based shift conversion catalyst is a reduced metal copper, which contains approximately 30 to 45% of copper oxide in the shipment of the catalyst, and there is thus a need to reduce the catalyst with a reducing gas such as hydrogen for activation before use. In contrast, it has been proposed that the reduction treatment is carried out in a short period of time with the use of a highly heat-resistance noble-metal-based catalyst (see, for example, Patent Documents 2 and 3 below).

### Prior Art Document

### Patent Document

Patent Document 1: Japanese Patent Application Laid-Open No. 2004-75474
Patent Document 2: Japanese Patent Application Laid-Open No. 2000-178007
Patent Document 3: Japanese Patent Application Laid-Open No. 2003-144925

### Non-Patent Documents

Non-Patent Document 1: Catalyst Notebook, Sud-Chemie Catalysts Japan, Inc., published on July 1, 2001, pp. 22-23

### SUMMARY OF THE INVENTION

### PROBLEMS TO BE SOLVED BY THE INVENTION

As described above, while there are various compositions as the shift conversion catalyst, there has been a need to use a large amount of catalyst which is highly active at low temperatures that is advantageous in terms of carbon monoxide conversion rate, in order to sufficiently lower the carbon monoxide concentration to 1% or less. Conventionally, as a factor which restricts the reaction with the shift conversion catalyst, the inhibition of the reaction by restriction on chemical equilibrium with the progress of the carbon monoxide shift reaction has been considered as a main factor, and the shift conversion catalyst has been thus believed to be required in large amounts in order to further lower the carbon monoxide concentration.

The present invention has been achieved in view of the problem with the shift conversion catalyst described above, and an object of the present invention is to provide an apparatus and a method for carbon monoxide shift conversion, which improve the conversion rate of a carbon monoxide concentration without increasing the used amount of a shift conversion catalyst.

### MEANS FOR SOLVING THE PROBLEM

Earnest studies carried out by the inventors of the present application have found that among shift conversion catalysts, there are some catalysts which undergo a decrease in catalytic activity due to the fact that the active species of the catalysts are poisoned with carbon dioxide as a product of a carbon monoxide shift reaction, apart from the restriction on chemical equilibrium, whereas there are some catalysts which undergo no significant decrease in catalytic activity due to carbon dioxide poisoning. Furthermore, it has been found that in the case of the catalysts which undergo a decrease in catalytic activity due to carbon dioxide poisoning, the decrease in catalytic activity is suppressed by controlling the reaction temperature.

Therefore, in order to achieve the object mentioned above, the apparatus and method for carbon monoxide shift conversion according to the present invention has, on the basis of the new findings of the inventors of the present application, a first feature that: a carbon monoxide shift reaction is divided into at least two stages of an upstream side and a downstream side, the upstream side and the downstream side respectively include a first catalyst and a second catalyst, the first catalyst has a property that a carbon monoxide conversion rate decreases with an increase in carbon dioxide concentration in a supplied reaction gas in the case of a constant carbon monoxide concentration in the supplied reaction gas and a constant reaction temperature, and the degree of decrease in carbon monoxide conversion rate with respect to an increase in the carbon dioxide concentration in the supplied reaction gas in the case of the second catalyst is lower than the degree of decrease in carbon monoxide conversion rate with respect to an increase in the carbon dioxide concentration in the supplied reaction gas in the case of the first catalyst.

In the carbon monoxide shift conversion apparatus and method according to the first feature mentioned above, when the upstream first catalyst has the property that, in the case of the constant carbon monoxide concentration in the supplied reaction gas, the carbon monoxide conversion rate decreases with an increase in the carbon dioxide concentration in the reaction gas, that is, the upstream first catalyst is a catalyst whose catalytic activity decreases due to carbon dioxide poisoning, even if the carbon dioxide concentration becomes higher toward the downstream of the catalyst layer through the carbon monoxide shift reaction and thus the catalytic activity decreases, it is possible to suppress the influence of an decrease in catalytic activity, and improve the conversion rate of the carbon monoxide concentration because the catalyst which has higher resistance to carbon dioxide poisoning than the first catalyst is used as the downstream second catalyst.

Furthermore, in the carbon monoxide shift conversion apparatus and method according to the first feature mentioned above, the first catalyst is preferably a copper-zinc-based catalyst, whereas the second catalyst is preferably a noble-metal-based catalyst, in particular, a platinum-based catalyst, and furthermore, the second catalyst has a cerium oxide as a support. Furthermore, the second catalyst is preferably not more than the first catalyst in volume. While the copper-zinc-based catalyst is capable of a shift conversion reaction at a low temperature of 150°C to 300°C as described above, the decrease in catalytic activity due to carbon dioxide poisoning has been made clear by earnest studies carried out by the inventors of the present application as described later. On the other hand, it has been made clear by earnest studies carried out by the inventors of the present application that the platinum-based catalyst exhibits a more favorable low-temperature activity as compared with the copper-zinc-based catalyst, and has higher resistance to carbon dioxide poisoning as compared with the copper-zinc-based catalyst. When the copper-zinc-based catalyst is used over the entire area of, or downstream in the catalyst layer, the carbon monoxide conversion rate is decreased by the influence of the poisoning, and in order to improve the carbon monoxide conversion rate, there is a need to increase the used amount of the copper-zinc-based catalyst. On the other hand, the use of the platinum-based catalyst over the entire area of the catalyst layer is disadvantageous in terms of cost because the platinum catalyst is a noble-metal-based catalyst. In contrast, by using the copper-zinc-based catalyst upstream and using the platinum-based catalyst downstream, it is possible to take advantage of the both catalysts to improve the conversion rate of the carbon monoxide concentration, while suppressing the influence of carbon dioxide poisoning on the copper-zinc-based catalyst, and also while suppressing the increase in cost due to the use of the platinum catalyst.

Furthermore, in the carbon monoxide shift conversion apparatus and method according to the first feature mentioned above, the reaction temperatures of the first catalyst and the second catalyst are controlled concurrently, or controlled independently from each other. In the former case, the temperature control over the entire catalyst layer can be carried out at a time, and the simplification of the temperature control can be achieved. On the other hand, in the latter case, the conversion rate of the carbon monoxide concentration can be further improved by controlling the upstream catalyst layer and the downstream catalyst layer to respective optimum temperature ranges.

Furthermore, the carbon monoxide shift conversion apparatus and method according to the first feature mentioned above has a second feature that, when the first catalyst and the second catalyst have the same composition and structure, the respective reaction temperatures of the first catalyst and the second catalyst are controlled independently from each other so that the degree of decrease in carbon monoxide conversion rate with respect to an increase in carbon dioxide concentration in the supplied reaction gas in the case of the second catalyst is lower than the degree of decrease in carbon monoxide conversion rate with respect to an increase in carbon dioxide concentration in the supplied reaction gas in the case of the first catalyst.

The earnest studies carried out by the inventors of the present application have been found that the control of the reaction temperatures even in the case of the same catalyst can suppress the influence of carbon dioxide poisoning, and thus, even when the first catalyst and the second catalyst have the same catalyst, the reaction temperatures are controlled independently from each other to decrease the sensitivity of the second catalyst to carbon dioxide poisoning, thereby making it possible to achieve the advantageous effect of the first feature.

Furthermore, in the carbon monoxide shift conversion apparatus and method according to the second feature mentioned above, the first catalyst and the second catalyst are preferably copper-zinc-based catalysts. While the copper-zinc-based catalyst is capable of a shift conversion reaction at a low temperature of 150°C to 300°C as described above, the decrease in catalytic activity due to carbon dioxide poisoning, and further, the change of the decrease in catalytic activity depending on the temperature have been made clear by earnest studies carried out by the inventors of the present application as described later. When the copper-zinc-based catalyst is used over the entire area of, or downstream in the catalyst layer under the same temperature control, the carbon monoxide conversion rate is decreased by the influence of the poisoning, and in order to improve the carbon monoxide conversion rate, there is a need to increase the used amount of the copper-zinc-based catalyst. Thus, this use is disadvantageous in terms of cost. In contrast, when the upstream and downstream copper-zinc-based catalysts are subjected to temperature control independently from each other to suppress the influence of carbon dioxide poisoning on the downstream copper-zinc-based catalyst more than on the upstream copper-zinc-based catalyst, the conversion rate of the carbon monoxide concentration can be improved.

Furthermore, a hydrogen production apparatus according to the present invention has a feature of including: the carbon monoxide shift conversion apparatus which has the feature described above; and a carbon monoxide selective oxidizer for decreasing, by selective oxidation, a carbon monoxide concentration in a gas processed by the carbon monoxide shift conversion apparatus.

The hydrogen production apparatus which has the feature mentioned above decreases the combustion of carbon monoxide in the carbon monoxide selective oxidizer, and at the same time, also substantially decreases the combustion of hydrogen. Thus, when the hydrogen production apparatus is applied to a fuel cell, an improvement can be made in the power generation efficiency of the fuel cell, and furthermore, the carbon monoxide selective oxidizer can be reduced in size, and made lower in cost.

### BRIEF EXPLANATION OF DRAWINGS

Fig. 1 is a configuration diagram schematically illustrating a schematic configuration according to an embodiment of a carbon monoxide shift conversion apparatus according to the present invention.
Fig. 2 is a configuration diagram schematically illustrating a schematic configuration of an experimental apparatus for a carbon monoxide shift conversion method according to the present invention.
Fig. 3 is a diagram listing the compositions of gases to be processed for use in the experimental apparatus shown in Fig. 2.
Figs. 4A and 4B are characteristic diagrams showing carbon monoxide conversion rate characteristics for each of a first catalyst and a second catalyst by itself.
Figs. 5A and 5B are characteristic diagrams showing the CO concentration dependence of carbon monoxide conversion rate for each of the first catalyst and second catalyst by itself.
Figs. 6A and 6B are characteristic diagrams showing the CO₂ concentration dependence of carbon monoxide conversion rate for each of the first catalyst and second catalyst by itself.
Fig. 7 is a characteristic diagram showing measurement results of CO₂ poisoning characteristics for the first catalyst and the second catalyst.
Fig. 8 is a characteristic diagram showing measurement results of CO₂ poisoning characteristics for the first catalyst and the second catalyst.
Fig. 9 is a characteristic diagram showing carbon monoxide conversion rate characteristics for comparative examples which differ in catalyst layer structure from the carbon monoxide shift conversion apparatus according to the present invention.
Fig. 10 is a characteristic diagram showing carbon monoxide conversion rate characteristics for a comparative example which differs in catalyst layer structure from another example of the carbon monoxide shift conversion apparatus according to the present invention.
Fig. 11 is a characteristic diagram showing the relationship between the catalyst amount and the carbon monoxide conversion rate for a comparative example including only the first catalyst for use in the carbon monoxide shift conversion apparatus according to the present invention.
Fig. 12 is a table indicating the influence of the amount of platinum supported in the second catalyst for use in the carbon monoxide shift conversion apparatus according to the present invention.
Fig. 13 is a characteristic diagram indicating the influence of the amount of platinum supported in the second catalyst for use in the carbon monoxide shift conversion apparatus according to the present invention.
Fig. 14 is a configuration diagram schematically illustrating a schematic configuration of an experimental apparatus for a hydrogen production apparatus using a carbon monoxide shift conversion apparatus according to the present invention.
Fig. 15 is a configuration diagram schematically illustrating a schematic configuration according to another embodiment of a carbon monoxide shift conversion apparatus according to the present invention.

### EXPLANATION OF REFERENCES

1: Carbon monoxide shift conversion apparatus
2: Reaction tube
3: First catalyst layer
4: Second catalyst layer
5: Inlet
6: Outlet
11 to 13: Supply pipe
14: Mixed gas supply pipe
15: Vaporizer
16: Water tank
17: Water supply pipe
18: Electric furnace
19: Mantle heater
20, 22: Exhaust pipe
21: Drain tank (cooler)
23: Gas chromatography analyzer
24: Carbon monoxide selective oxidizer
25: Air pump
26: Cooling water pump
G0: Gas to be processed (reaction gas)
G1, G1': Processed gas
G2: Processed gas (after selective oxidation)

### MODE FOR CARRYING OUT THE INVENTION

Embodiments of an apparatus and a method for carbon monoxide shift conversion according to the present invention (hereinafter, referred to as "the inventive apparatus" and "inventive method" appropriately) will be described with reference to the drawings.

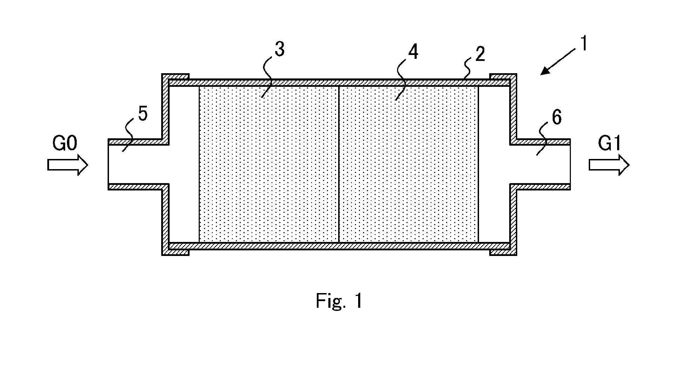

An inventive apparatus 1 is configured to include a first catalyst layer 3 loaded with a copper-zinc carbon monoxide shift conversion catalyst (a first catalyst) and a second catalyst layer 4 loaded with a platinum-based carbon monoxide shift conversion catalyst (a second catalyst) respectively upstream and downstream in a cylindrical reaction tube 2 as illustrated schematically in Fig. 1. A gas to be processed G0 (reaction gas) is supplied from an inlet 5 of the reaction tube 2 into the reaction tube 2, a shift conversion reaction is developed during the passage of the gas through the first and second catalyst layers 3, 4, and a processed gas G1 after the reaction is discharged from an outlet 6 of the reaction tube 2. The reaction temperature is controlled by a known method, in such a way that the reaction tube 2 is placed in an electric furnace or a thermostated oven, not shown. In the present embodiment, the temperature in the reaction tube 2 is controlled at a constant temperature, the reaction temperature in the first catalyst layer 3 and the reaction temperature in the second catalyst layer 4 are thus controlled at the same temperature in common.

In the present embodiment, as an example, the first catalyst uses a commercially available copper-zinc-based catalyst (Cu/Zn catalyst) prepared by a common production process (coprecipitation process) as a carbon monoxide shift conversion catalyst, which has a composition of a copper oxide, a zinc oxide, and alumina (support), whereas the second catalyst uses a Pt/CeO₂ catalyst prepared by preparing a nitric acid solution of a predetermined concentration of dinitrodiamine platinum crystal (Pt(NO₂)₂(NH₃)₂), supporting the solution onto a cerium oxide (CeO₂), and reducing the dried product at 300°C in a hydrogen stream.

The inventive apparatus and method are an apparatus and a method for carbon monoxide shift conversion, in which carbon monoxide and water vapor contained in the gas to be processed G0 such as a reformed gas are reacted and thereby converted into carbon dioxide and hydrogen. The substantial improvement in carbon monoxide conversion rate through the use of the inventive apparatus 1 configured as described above will be illustrated with reference to data from experiments carried out by the inventive method.

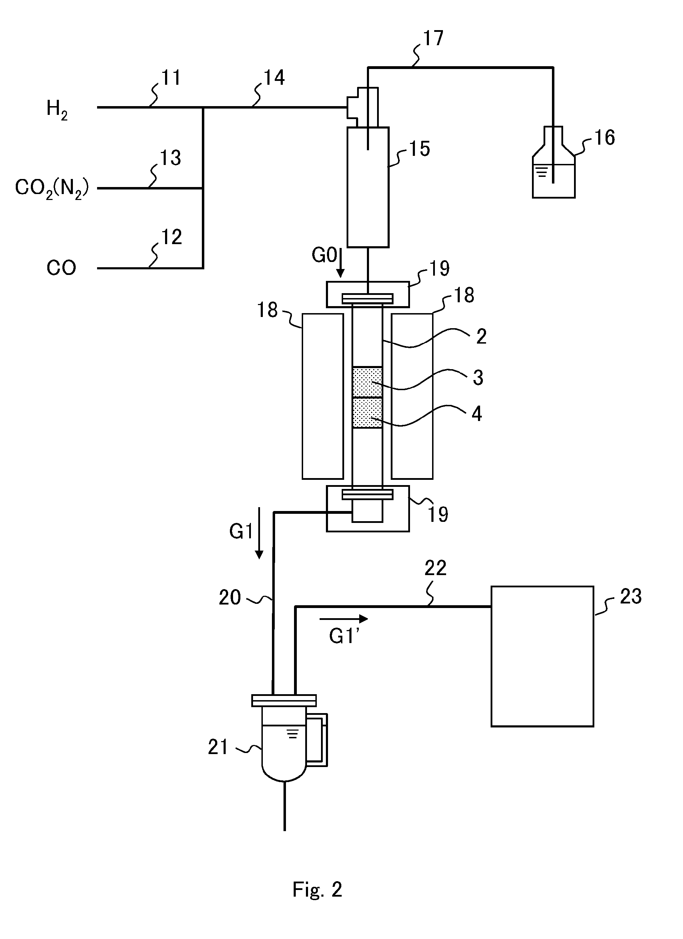

First, an experimental apparatus used in the following experiments will be described. Fig. 2 schematically illustrates the schematic configuration of the experimental apparatus. As shown in Fig. 2, respective single gases of H₂, CO, and CO₂ are supplied from supply pipes 11 to 13 with stop valves, pressure reducing valves, solenoid valves, mass flow controllers, check valves, pressure gauges, etc. (not shown) interposed in communication with respective supply sources, and a mixed gas of H₂, CO, and CO₂, which is produced by interflow, is injected into an inlet of a vaporizer 15 from a mixed supply pipe 14. On the other hand, purified water is injected from a water tank 16, through a water supply pipe 17 with a pump, not shown, a check valve, a resistor, etc. (not shown) interposed, into the inlet of the vaporizer 15. The purified water injected into the vaporizer 15 is heated for vaporization at a temperature of approximately 200°C to produce a mixed gas of H₂, CO, CO₂, and H₂O (gas to be processed G0), and the mixed gas is injected into the reaction tube 2. It is to be noted that in this experiment, only steam (H₂O) is first introduced from the vaporizer 15 into the reaction tube 2, and the supply of the mixed gas of H₂, CO, and CO₂ is started after the steam adequately reaches the catalyst layer. The processed gas G1 discharged from the outlet of the reaction tube 2 via an exhaust pipe 20 is cooled by passing through a drain tank (cooler) 21 with purified water filled therein, and the processed gas G1' with water removed therefrom is supplied to a gas chromatography analyzer 23 through an exhaust pipe 22 with a pressure gauge, a back pressure valve, a three-way solenoid valve, etc. (not shown) interposed.

The reaction tube 2, which is housed in an annular electric furnace 18, has the inlet and outlet respectively covered with mantle heaters 19. The first catalyst and second catalyst are inserted as two front and back stages into a central portion of the reaction tube 2 to constitute the first and second catalyst layers 3, 4, and with the periphery thereof filled with glass wool, the respective catalyst layers 3, 4 are fixed so as to keep from moving. In addition, a casing pipe (not shown) is inserted from the outlet side just proximal to the second catalyst layer 4 in the reaction tube 2, and a thermocouple is inserted in the casing pipe. In this configuration, the reaction temperature in the reaction tube 2 is measured with the thermocouple to control heating of the electric furnace 18 and mantle heaters 19, and thereby control the reaction temperature in the reaction tube 2 at a constant temperature.

While the reaction tube 2 has a tube main body section, respective plugs of the inlet and outlet, a reducer section, and the like which are made of metals such as stainless steel in this experimental apparatus, the structure, size, material, etc. of the reaction tube 2 may be suitably selected in an appropriate manner, depending on the yield of the carbon monoxide shift reaction.

It is to be noted that a granular catalyst with a particle size of 0.85 to 1 mm, subjected to a H₂ reduction treatment at 200°C for 1 hour, was used as each of the first catalyst (Cu/Zn catalyst) and second catalyst (Pt/CeO₂ catalyst) described above in this experiment. As for the amount of supported platinum in the second catalyst, three types of 10 wt%, 3 wt%, and 1 wt% were used separately, depending on the content of the experiment.

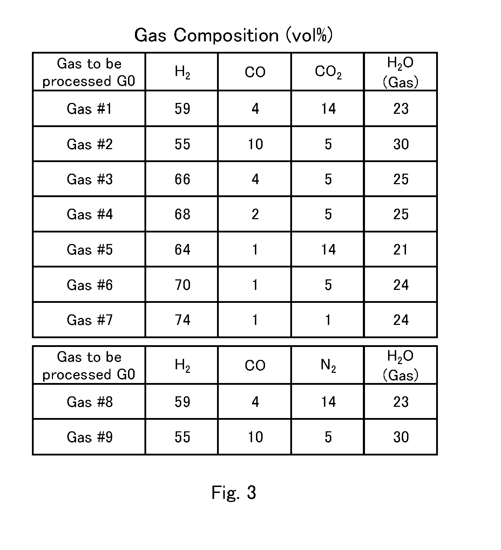

Next, the gas composition (mix proportions of H₂, CO, CO₂, and H₂O) of the gas to be processed G0 used in the experiment will be described. In this experiment, the nine types of gases to be processed G0 shown in the gas composition table of Fig. 3 were prepared, and used separately depending on the content of the experiment. It is to be noted that the mix proportions of the respective constituent gases (H₂, CO, CO₂, and H₂O) of the nine types of gases to be processed G0 are adjusted by controlling the amounts of the respective constituent gases (H₂, CO, CO₂) supplied from the respective supply pipes 11 to 13 and the amount of purified water (H₂O) supplied to the vaporizer 15. Gas #1 and Gas #2 are two types of gases to be processed G0 which differ in terms of volume% for all of the constituent gases. Gas #1 has 4% of CO and 14% of CO₂ in terms of volume%, whereas Gas #2 has 10% of CO and 5% of CO₂ in terms of volume%, where the magnitudes for CO and CO₂ are inverted in terms of volume%. In this regard, with the progress of the carbon monoxide shift reaction represented by Chemical Formula 1 above, the CO concentration in the gas to be processed G0 is decreased, whereas the CO₂ concentration therein is increased, and thus, Gas #2 and Gas #1 represent the upstream gas to be processed and the downstream gas to be processed in the catalyst layer in a simulated manner. Gases #2 to #4 are three different types of gases to be processed G0 which have CO₂ fixed at a constant value (5%) in terms of volume% and differ from each other in terms of volume% for CO, and intended to measure the CO concentration dependence. Gases #5 to #7 are three different types of gases to be processed G0 which have CO fixed at a constant value (1%) in terms of volume% and differ in terms of volume% for CO₂, and intended to measure the CO₂ concentration dependence. Gases #8 and #9 are comparative gases in which the CO₂ in Gases #1 and #2 is substituted with N₂, and intended to compare the influence of CO₂ poisoning as described later.

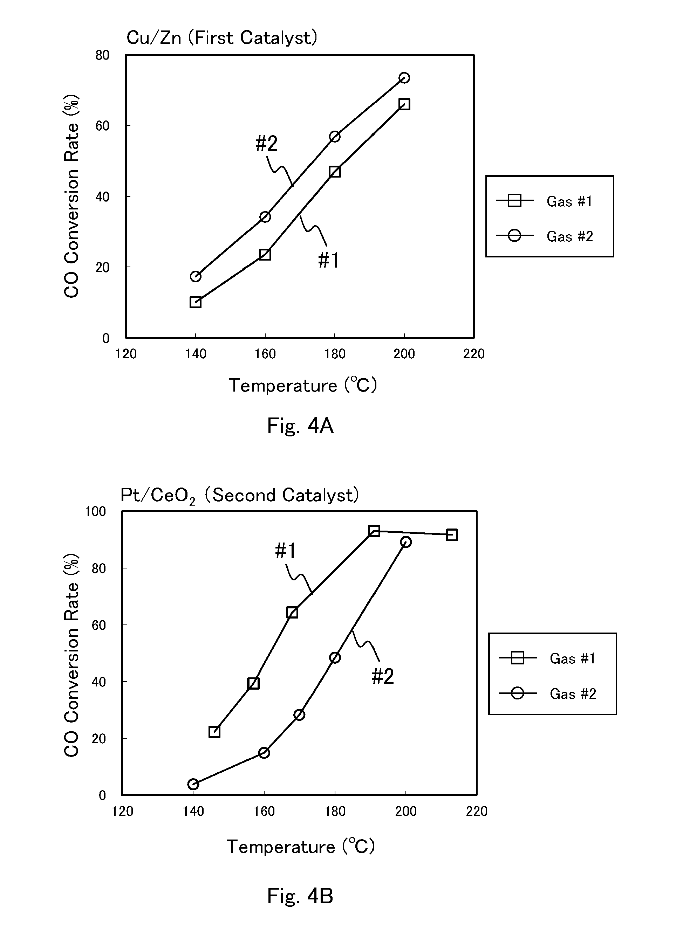

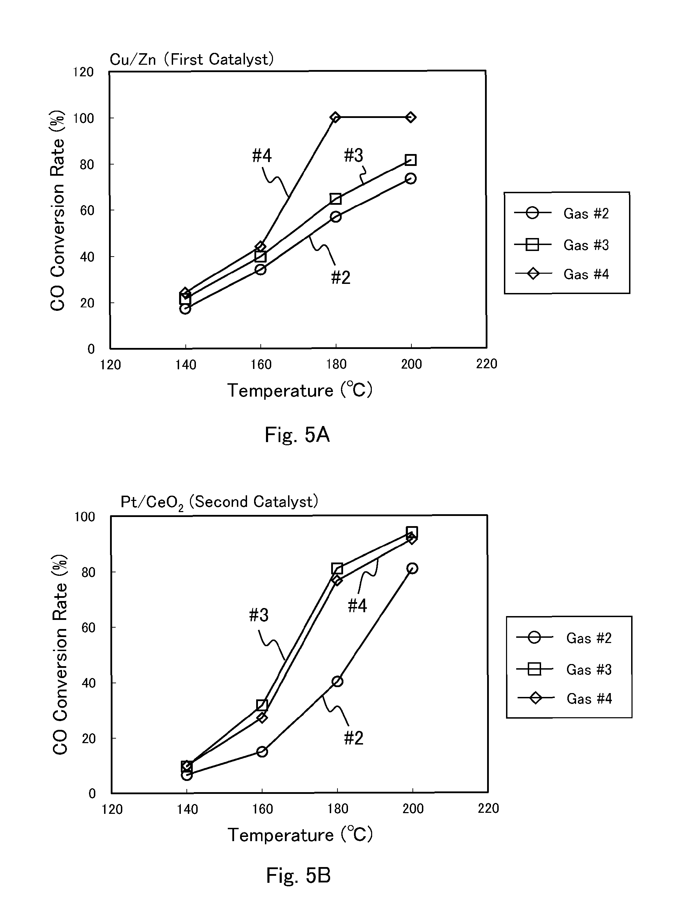

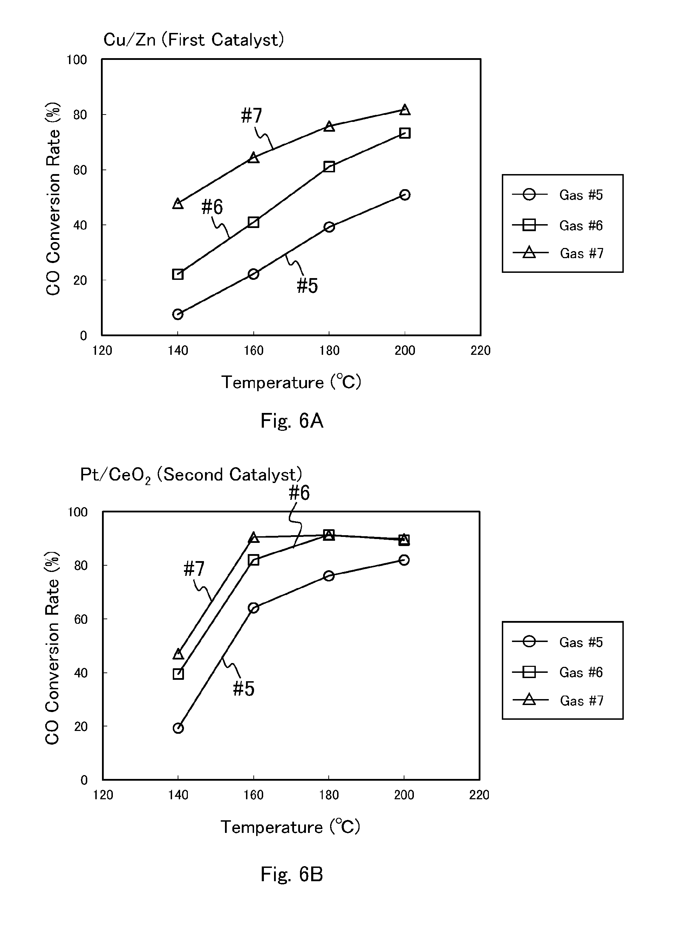

Next, Figs. 4 to 6 show the results of examining carbon monoxide conversion rate characteristics for each of the first catalyst and second catalyst by itself. Figs. 4A to 6A each show the measurement results for the first catalyst, whereas Figs. 4B to 6B each show the measurement results for the second catalyst. Fig. 4 shows the measurement results in the case of using Gas #1 and Gas #2 for each reaction temperature, Fig. 5 shows the measurement results (CO concentration dependence) in the case of using Gas #2 to #4 for each reaction temperature, and Fig. 6 shows the measurement results (CO₂ concentration dependence) in the case of using Gas #5 to #7 for each reaction temperature. The second catalyst was used with the amount of supported platinum of 10 wt%. It is to be noted that in the measurements shown in Figs. 4 to 6, the amount of catalyst used and the contact time of the catalyst to be measured with the gas to be processed G0 are kept constant, except for the measurement conditions shown (the reaction temperature and the gas composition of the gas to be processed G0). Specifically, the amount of catalyst used is 0.5 cc for each catalyst. In addition, the CO₂ concentrations in Gases #2 to #4 used are kept constant to eliminate the influences of the CO₂ concentrations in the measurement of the CO concentration dependence as shown in Fig. 5, whereas the CO concentrations in Gases #5 to #7 used are kept constant to eliminate the influences of the CO concentrations in the measurement of the CO₂ concentration dependence as shown in Fig. 6.

As shown in Fig. 4, the first catalyst and the second catalyst both undergo a further increase in catalytic activity at higher temperature to improve the carbon monoxide conversion rate. However, it is found that the sensitivity to the CO concentration and the sensitivity to the CO₂ concentration differ from each other in the catalytic activities of the first catalyst and second catalyst.

First, when a comparison is made between Fig. 4A and Fig. 4B with the use of Gas #1 including 4% of CO and 14% of CO₂ in terms of volume% and Gas #2 including 10% of CO and 5% of CO₂ in terms of volume%, the carbon monoxide conversion rate of Gas #2 is higher than that of Gas #1 in the case of the first catalyst, whereas the carbon monoxide conversion rate of Gas #1 is higher than that of Gas #2 in the case of the second catalyst, meaning that the both catalysts develop reverse tendencies. This suggests that the first catalyst is more suitable for the upstream gas composition of the catalyst layer than the second catalyst, whereas the second catalyst is more suitable for the downstream gas composition of the catalyst layer than the first catalyst, and further suggests that at least any one of the sensitivity to the CO concentration and the sensitivity to the CO₂ concentration differs substantially between the first catalyst and the second catalyst.

Next, when a comparison is made between Fig. 5A and Fig. 5B with the use of Gases #2 to #4 including 10%, 4%, and 2% of CO in terms of volume%, respectively, the tendency to decrease the carbon monoxide conversion rate at a higher CO concentration is common to both the first catalyst and the second catalyst in the range of the reaction temperature from 140°C to 200°C. When a comparison is made between 10% and 4% of CO in terms of volume% in Fig. 4A and Fig. 5A, the carbon monoxide conversion rate is higher at the CO concentration of 10 vol% in the case of Fig. 4A, whereas the carbon monoxide conversion rate is higher at the CO concentration of 4 vol% in the case of Fig. 5A. Accordingly, the sensitivity to the CO concentration is inverted between Fig. 4A and Fig. 5A, and it is found that the reason is that the CO₂ concentration undergoes a change to substantially change the sensitivity to the CO concentration in the case of the first catalyst, due to the fact that the CO₂ concentration undergoes a change in Fig. 4A, whereas the CO₂ concentration is constant at 5 vol% in Fig. 5A. On the other hand, when a comparison is made between 10% and 4% of CO in terms of volume% in Fig. 4B and Fig. 5B, the carbon monoxide conversion rate is higher at the CO concentration of 4 vol% in each case, and the sensitivity to the CO concentration develops a similar tendency between when the CO₂ concentration is changed, and when the CO₂ concentration is constant. More specifically, it is found that the first catalyst is sensitive to the change in CO₂ concentration, as compared with the second catalyst.

Next, when a comparison is made between Fig. 6A and Fig. 6B with the use of Gases #5 to #7 including 14%, 5%, and 1% of CO₂ in terms of volume%, respectively, the first catalyst and the second catalyst both have a tendency to decrease the carbon monoxide conversion rate at a higher CO₂ concentration. However, when the difference in carbon monoxide conversion rate (the degree of decrease) with respect to the difference in CO₂ concentration (the increase from 1 vol% to 14 vol%) is measured in the range of the reaction temperature from 140°C to 200°C, the result is a large difference of approximately 31% to 42% in the case of the first catalyst, whereas the result is a difference of approximately 8% to 28% in the case of the second catalyst, which is suppressed more than in the case of the first catalyst. In addition, the difference in carbon monoxide conversion rate (the degree of decrease) with respect to the difference in CO₂ concentration (the increase from 1 vol% to 5 vol%) in the range of the reaction temperature from 140°C to 200°C is large, approximately 9% to 26%, in the case of the first catalyst, whereas the difference is approximately 0% to 8% in the case of the second catalyst, which is substantially suppressed as compared with the first catalyst. In summary, the carbon monoxide conversion rate undergoes a substantial decrease with the increase in CO₂ concentration from the low level of 1 vol% in the case of the first catalyst, whereas the carbon monoxide conversion rate has a tendency to undergo a slight decrease with the increase in CO₂ concentration from on the order of 5 vol% in the case of the second catalyst, and it is found that the sensitivity to the CO₂ concentration differs substantially between the first catalyst and the second catalyst. In short, it can be determined that the first catalyst has a tendency to be poisoned with CO₂ as a product of the carbon monoxide shift reaction to undergo a substantial decrease in catalytic activity at a CO₂ concentration of on the order of 1 vol% or more.

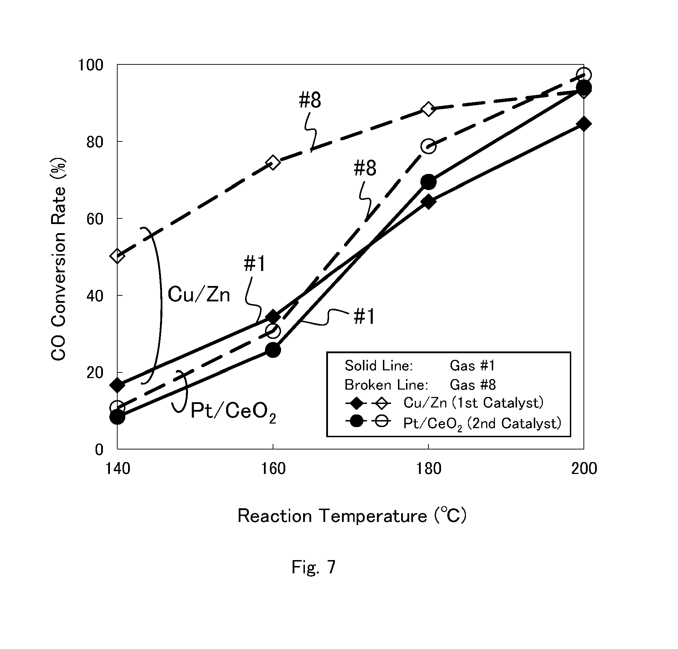

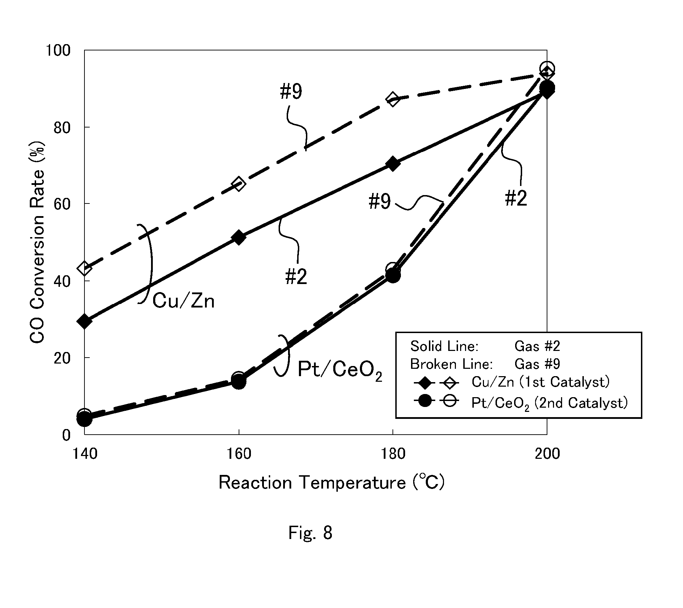

In the experiment result shown in Fig. 6, Gases #5 to #7 used also undergo changes in, besides the CO₂ concentration, H₂ and H₂O concentrations with the change in CO₂ concentration. Thus, in order to measure the degree of CO₂ poisoning while keeping the respective concentrations of CO, H₂, and H₂O constant, Figs. 7 and 8 respectively show the experiment results of using Gas #1 and Gas #8 in which the CO₂ in Gas #1 is substituted with N₂ and the experiment results of using Gas #2 and Gas #9 in which the CO₂ in Gas #2 is substituted with N₂. In the experiments of Figs. 7 and 8, the carbon monoxide conversion rate for each of the first catalyst and second catalyst by itself was measured for each reaction temperature. It is to be noted that in the measurements shown in Figs. 7 and 8, the amount of catalyst used and the contact time of the catalyst to be measured with the gas to be processed G0 are kept constant, except for the measurement conditions shown (the reaction temperature, the gas composition of the gas to be processed G0). The second catalyst was used with the amount of supported platinum of 10 wt%. In addition, the amount of catalyst used is 0.5 cc for each catalyst.

From Figs. 7 and 8, it is found that the substitution of CO₂ in the gas to be processed G0 with N₂ makes a substantial improvement in carbon monoxide conversion rate in the case of the first catalyst, whereas the substitution makes almost no improvement in the carbon monoxide conversion rate or an extremely small improvement as compared with the first catalyst in the case of the second catalyst. In addition, when a comparison is made between the measurement results in Figs. 7 and 8, the substitution described above substantially increases the carbon monoxide conversion rate in the case of the first catalyst, because the CO₂ concentration is higher in Gas #1 for use in Fig. 7 than in Gas #2 for use in Fig. 8. As described above, it has been made clear that, when the CO concentration in a supplied reaction gas and the reaction temperature are constant, the first catalyst significantly develops the property that a carbon monoxide conversion rate decreases, that is, undergoes CO₂ poisoning at a higher CO₂ concentration in the supplied reaction gas, whereas the second catalyst develops a lower degree of decrease in carbon monoxide conversion rate with respect to an increase in CO₂ concentration in the supplied reaction gas, as compared with the first catalyst, and thus undergoes an extremely low degree of CO₂ poisoning. In other words, from the substitution experiments shown in Figs. 7 and 8, the CO₂ poisoning characteristics can be compared between the first catalyst and the second catalyst.

As described above, the first catalyst has a tendency to be poisoned with CO₂ at a CO₂ concentration of on the order of 1% or more to undergo a substantial decrease in catalytic activity, and thus, when the catalyst layer in the carbon monoxide shift conversion apparatus is composed of only the first catalyst, the CO₂ concentration will be increased downstream in the catalyst layer to undergo a substantial decrease in catalytic activity. In contrast, when attention is focused on the substantial difference in the sensitivity to the CO₂ concentration between the first catalyst and the second catalyst as described above, the use of, downstream in the catalyst layer, the second catalyst with a relatively low sensitivity to the CO₂ concentration, that is, a low degree of CO₂ poisoning makes it possible to substantially improve the carbon monoxide conversion rate as compared with a case in which the catalyst layer is composed of only the first catalyst, and can also save the amount of catalyst used in the entire catalyst layer. The results of experiments in this regard will be described below.

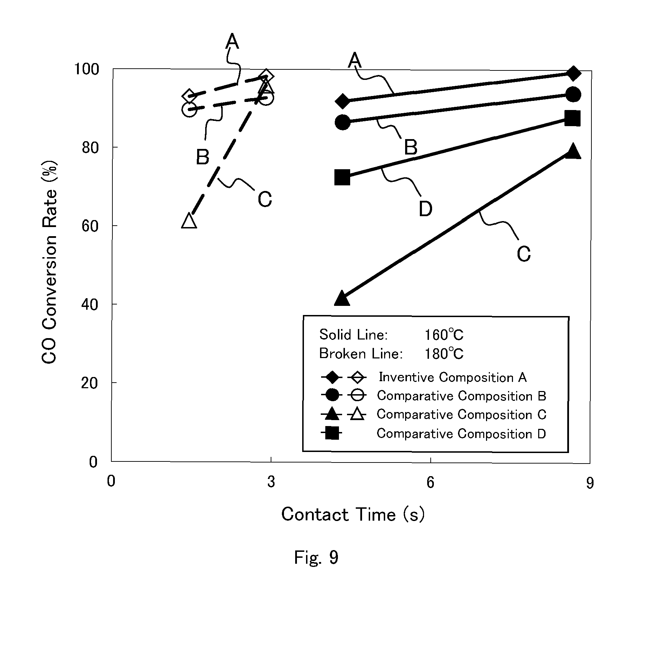

Fig. 9 shows the results of measuring the relationship between the carbon monoxide conversion rate and the contact time for four catalyst layer compositions: an inventive composition A using the first catalyst upstream and the second catalyst downstream as in the inventive apparatus 1; a comparative composition B using the first catalyst entirely as a comparative example; a comparative composition C using the second catalyst entirely as a comparative example; and a comparative composition D using the second catalyst upstream and the first catalyst downstream as a comparative example, as for the composition of the catalyst layer in the reaction tube 2. The amount of the catalyst in the catalyst layer was 3 cc in each case, and the first catalyst and the second catalyst were the same (1.5 cc) in quantity for the inventive composition A and the comparative composition D. The measurements were made at two reaction temperatures of 160°C and 180°C with the use of Gas #2 as the gas to be processed G0. Further, the second catalyst was used with the amount of supported platinum of 10 wt%. In addition, the reaction temperature is just 160°C for the comparative composition D. The contact time (unit: second) indicated on the horizontal axis in the respective figures is the residence time (the reciprocal of the space velocity) of the gas to be processed G0 in the catalyst layer, and the contact time was controlled by the flow rate of the gas to be processed G0 in the reaction tube 2.

From Fig. 9, it is found that when the contact time is longer, the carbon monoxide conversion rate approaches the equilibrium conversion rate with the progress of the carbon monoxide shift reaction, and then the saturation. In the case of the reaction temperature of 160°C, the carbon monoxide conversion rate at the contact time of approximately 8.7 seconds is approximately 93.9% for the comparative composition B with the catalyst layer entirely composed of the first catalyst, approximately 79.6% for the comparative composition C with the catalyst layer entirely composed of the second catalyst, and approximately 99.3% for the inventive composition A using the first catalyst upstream and the second catalyst downstream. The difference in carbon monoxide conversion rate between the comparative composition B and the comparative composition C in Fig. 9 falls in with the comparison result between the first catalyst and the second catalyst as shown in Fig. 4 in the case of Gas #2 for the gas to be processed G0, and only from this result, the use of the first catalyst results in a higher carbon monoxide conversion rate than the use of the second catalyst. Thus, it is apparently considered that the inventive composition A of the first catalyst and second catalyst combined half and half undergoes a larger decrease in carbon monoxide conversion rate than the comparative composition B (as is true with the comparative composition D as described later), and in fact, as shown in Fig. 9, the carbon monoxide conversion rate is higher in the inventive composition A with the second catalyst located downstream of the first catalyst. This is because the first catalyst has a tendency to be poisoned with CO₂ at a CO₂ concentration on the order of 1% or more to increase the degree of poisoning downstream in the catalyst layer and undergo a substantial decrease in catalytic activity as described above, and the change from the first catalyst to the second catalyst downstream substantially improves the carbon monoxide conversion rate. Likewise, in the case of the comparative composition D of the first catalyst and second catalyst combined half and half, the carbon monoxide conversion rate at the contact time of approximately 8.7 seconds is 87.8%, which is improved more than in the case of the comparative composition C, but inferior to the comparative composition B.

In the case of the reaction temperature of 180°C, the carbon monoxide conversion rate is saturated in shorter contact time, and at the contact time of approximately 2.9 seconds, the carbon monoxide conversion rate is substantially saturated in each case of the inventive composition A and the comparative compositions B and C: and 98.2% for the inventive composition A; 92.7% for the comparative composition B; and 95.9% for the comparative composition C. Also in the case of the reaction temperature of 180°C, the carbon monoxide conversion rate is improved in the inventive composition A more than any of the comparative compositions B and C as in the case of the reaction temperature of 160°C. In addition, the improvement in the carbon monoxide conversion rate of the inventive composition A more than any of the comparative compositions B and C is made after a lapse of a certain period of constant contact time, and it is thus expected that the effect of the present invention will be appeared significantly as the CO₂ concentration is increased downstream in the catalyst layer with the progress of the carbon monoxide shift reaction. In addition, the effect is produced likewise at any of the reaction temperatures 160°C and 180°C, although there is a difference in contact time therebetween. Thus, it has been made clear that the use of the first catalyst upstream and the second catalyst downstream substantially improves the carbon monoxide conversion rate.

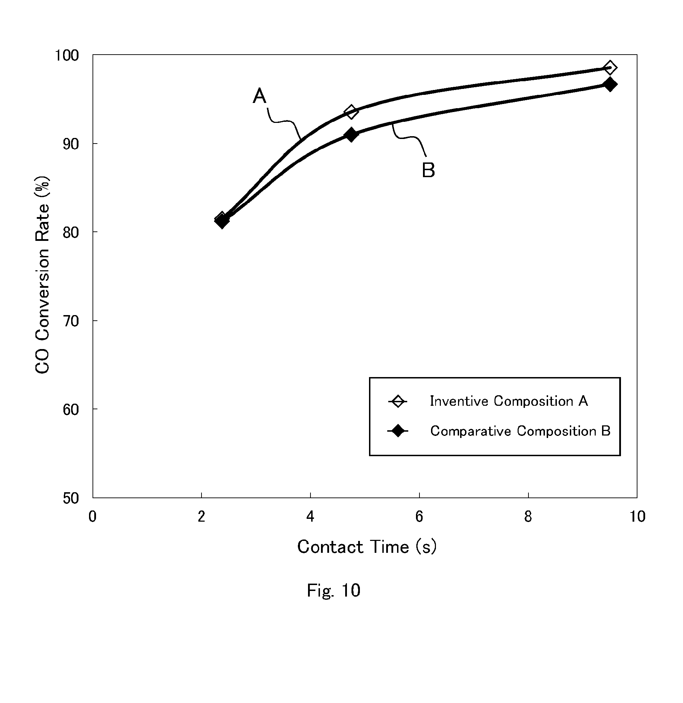

Next, the relationship will be described between the quantity ratio of the first catalyst to the second catalyst in the inventive composition A and the effect of improvement in carbon monoxide conversion rate. While the quantity ratio between the first catalyst and the second catalyst is 1 : 1 in the inventive composition A shown in Fig. 9, the effect of improvement in carbon monoxide conversion rate is confirmed when the quantity ratio of the second catalyst is reduced for the quantity ratio of 10 : 1. Fig. 10 shows the results of measuring the relationship between the carbon monoxide conversion rate and the contact time (second) for two catalyst layer compositions: an inventive composition A in which the quantity ratio is 10 : 1 between the first catalyst and the second catalyst; and a comparative composition B entirely using the first catalyst. The total catalyst amount in the catalyst layer is 3.3 cc in each case, and the quantity of the second catalyst is 0.3 cc in the inventive composition A. The measurements were made at just a reaction temperature of 160°C with the use of Gas #2 as the gas to be processed G0. Further, the second catalyst was used with the amount of supported platinum of 10 wt%.

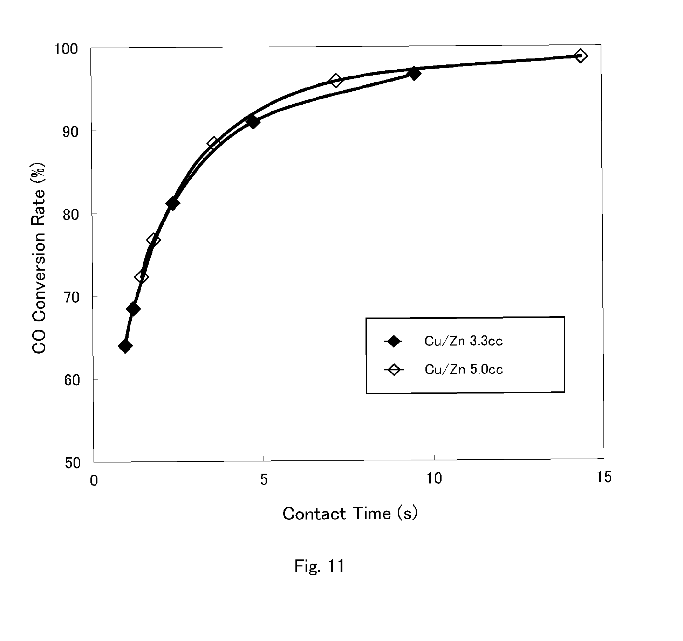

From Fig. 10, the carbon monoxide conversion rate at the contact time of approximately 8.7 seconds (flow rate: approximately 20.8 cc/min) is approximately 96.7% for the comparative composition B, whereas the carbon monoxide conversion rate is improved to approximately 98.5% for the inventive composition A. When this ratio is converted to the carbon monoxide concentration after the shift reaction, the carbon monoxide concentration is 0.15% in the case of the inventive composition A and 0.33% in the case of the comparative composition B, and thus, the carbon monoxide concentration is reduced to approximately 45% even when the quantity ratio between the first catalyst and the second catalyst is 10 : 1 in the case of the inventive composition A as compared with the comparative composition B. Fig. 11 shows, as a reference example, the relationship between the carbon monoxide conversion rate and the contact time (second) in cases of 3.3 cc and 5 cc for the first catalyst in the comparative composition B. From Fig. 11, it is found that the carbon monoxide concentration is not decreased unless the contact time is increased even when the amount of the first catalyst is increased by about 1.5 times, because the cases of 3.3 cc and 5 cc for the amount of the first catalyst result in substantially the same carbon monoxide conversion rate. More specifically, it is found that large amounts of catalyst and contact time are required for further cutting the carbon monoxide concentration in half in the case of the comparative composition B, while the use of the second catalyst in a small amount achieves at least a comparable effect in the case of the inventive composition A.

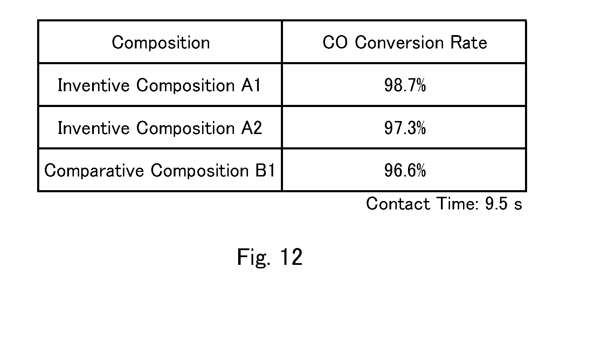

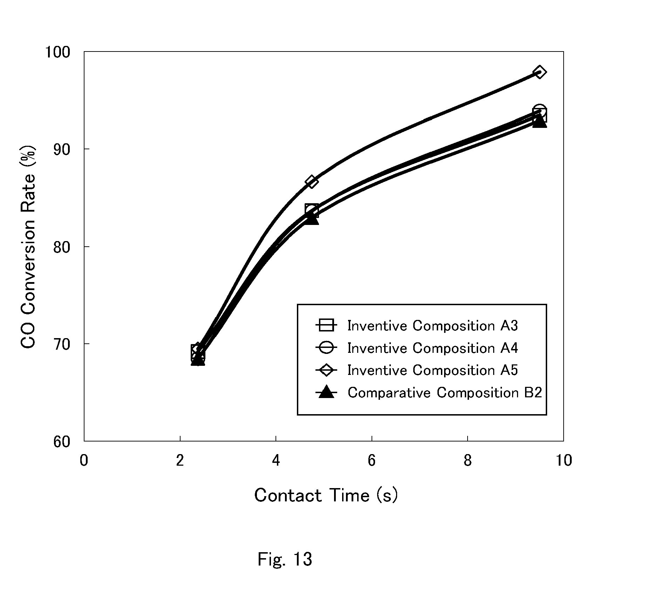

Next, the relationship will be described between the amount of platinum supported in the second catalyst in the inventive composition A and the effect of improvement in carbon monoxide conversion rate. Fig. 12 shows the results of measuring the carbon monoxide conversion rate at the contact time of 9.5 seconds for three catalyst layer compositions: two inventive compositions A adopting 3 wt% for the amount of platinum supported in the second catalyst, and adopting 23 : 10 and 28 : 5 for the quantity ratio between the first catalyst and the second catalyst (the former referred to as A1 and the latter referred to as A2); and a comparative composition B entirely using the first catalyst (comparative composition B1). Furthermore, Fig. 13 shows the results of measuring the relationship between the carbon monoxide conversion rate and the contact time for four catalyst layer compositions: three inventive compositions A using, as the first catalyst, a commercially available copper-zinc-based catalyst increased in strength by increasing the quantity of alumina from the first catalyst used in the inventive compositions A1 and A2, and adopting 1 wt%, 3 wt%, and 10 wt% for the amount platinum supported in the second catalyst (referred to as A3, A4, and A5 in order of increasing the amount of platinum supported); and a comparative composition B entirely using the first catalyst increased in strength (comparative composition B2). The total catalyst amount in the catalyst layer was 3.3 cc in each case of the inventive compositions A1 to A5 and the comparative compositions B1 and B2, and the quantity of the second catalyst was adjusted to 1.0 cc in the inventive composition A1, 0.5 cc in the inventive composition A2, and 0.3 cc in the inventive compositions A3 to A5. In the measurements of the carbon monoxide conversion rate in Figs. 12 and 13, the measurements were made at just a reaction temperature of 160°C with the use of Gas #2 as the gas to be processed G0.

From Fig. 12, the carbon monoxide conversion rate is approximately 96.6% in the comparative composition B1, whereas the ratio is approximately 98.7% and approximately 97.3% respectively in the inventive compositions A1 and A2, and improved more than the comparative composition B1 in each case. When this ratio is converted to the carbon monoxide concentration after the shift reaction, the carbon monoxide concentration is 0.13% in the case of the inventive composition A1, 0.27% in the case of the inventive composition A2, and 0.34% in the case of the comparative composition B1, and thus, as compared with the comparative composition B1, the carbon monoxide concentration is reduced to approximately 38% when the quantity ratio between the first catalyst and the second catalyst is 23 : 10 in the case of the inventive composition A1, whereas the carbon monoxide concentration is reduced to approximately 79% when the quantity ratio between the first catalyst and the second catalyst is 28 : 5 in the case of the inventive composition A2. It has been made clear that the catalytic activity of the second catalyst is decreased with a small amount of platinum supported, while the carbon monoxide conversion rate is improved even when the amount of platinum supported in the second catalyst is adjusted to 3 wt%.

Furthermore, from Fig. 13, at the contact time of 9.5 seconds, the carbon monoxide conversion rate is approximately 92.9% in the comparative composition B2, whereas the ratio is approximately 93.5%, approximately 93.9%, and approximately 97.9% respectively in the inventive compositions A3, A4 and A5, and improved more than the comparative composition B1 in each case. While the decreased amount of platinum supported in the second catalyst or the decreased quantity ratio of the second catalyst to the total catalyst amount decreases the catalytic activity in the entire inventive composition A and the effect of the invention decreases, it is found that the effect of improvement in carbon monoxide conversion rate is produced even in the case of 1 wt% for the amount of platinum supported in the second catalyst and 10% for the quantity ratio of the second catalyst to the total catalyst amount when the first catalyst itself has a low catalytic activity and a high degree of CO₂ poisoning, because the effect of the present invention depends on the relative relationship between the first catalyst and the second catalyst.

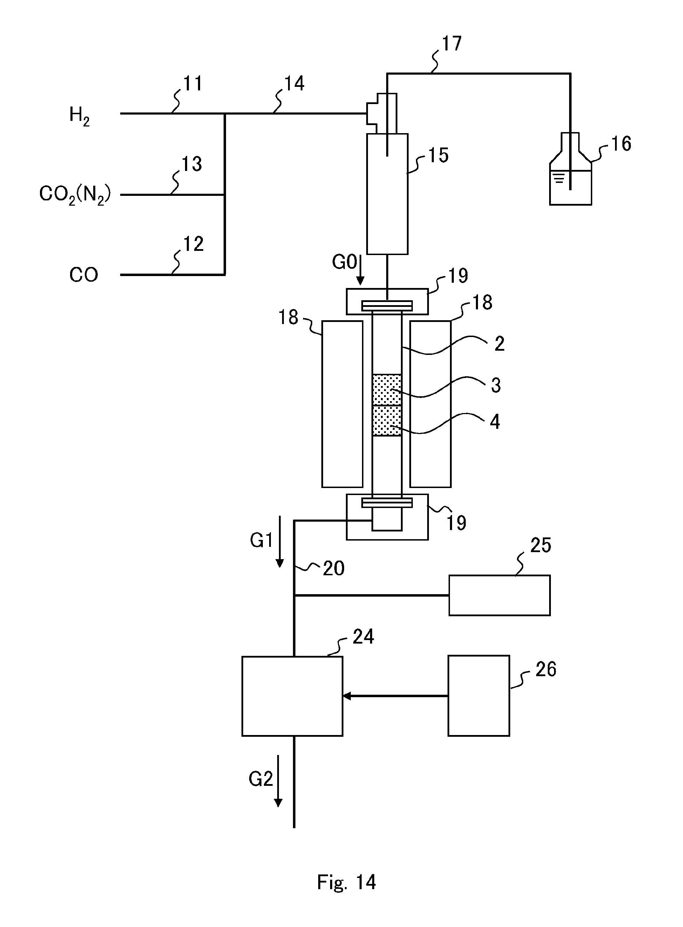

Next, on the assumption of a case of using the inventive apparatus 1 in an actual polymer electrolyte fuel cell system, the effect of applying the inventive apparatus 1 will be verified when a hydrogen production apparatus is configured such that a carbon monoxide selective oxidizer is provided downstream of the inventive apparatus 1, and the carbon monoxide concentration in a reformed gas is decreased to 10 ppm or less (for example, 5 ppm). Fig. 14 schematically illustrates the schematic configuration of an experimental apparatus for verifying the effect. The experimental apparatus shown in Fig. 14 is composed of, downstream of the exhaust pipe 20 of the experimental apparatus shown in Fig. 2, a carbon monoxide selective oxidizer 24, an air pump 25, and a cooling water pump 26 provided in place of the drain tank (cooler) 21, the exhaust pipe 22, and the gas chromatography analyzer 23. The processed gas G1 discharged from the reaction tube 2 of the carbon monoxide shift conversion apparatus is introduced into the carbon monoxide selective oxidizer 24 via the exhaust pipe 20. The carbon monoxide selective oxidizer 24 is loaded with a catalyst of ruthenium (Ru) supported on alumina. The exhaust pipe 20 is provided with the air pump 25 for adding oxygen for selective oxidation to the processed gas G1, and furthermore, the carbon monoxide selective oxidizer 24 is provided with the cooling water pump 26 for cooling the outer periphery of the carbon monoxide selective oxidizer 24. Although not shown, the structure is adapted to cool the processed gas G1 from the exhaust pipe 20 into the carbon monoxide selective oxidizer 24 by air cooling to 100°C. It is to be noted that the carbon monoxide shift conversion apparatus and peripherals thereof upstream of the exhaust pipe 20 have the same configuration as the experimental apparatus shown in Fig. 2, and the repeated description will be omitted.

This verification experiment was carried out for two catalyst layer compositions: an inventive composition A using the first catalyst upstream and the second catalyst downstream as in the case of the inventive apparatus 1; and a comparative example B entirely using the first catalyst as a comparative example, as for the composition of the catalyst layer in the reaction tube 2. The amount of the catalyst in the catalyst layer was 3 cc in each case, and the first catalyst and the second catalyst were the same (1.5 cc) in quantity for the inventive composition A. The reaction temperature was adjusted to 160°C. The processed gas G1 was supplied to the carbon monoxide selective oxidizer 24, and the output of the air pump 25 was controlled so that the carbon monoxide concentration was 5 ppm in the processed gas G2 discharged from the carbon monoxide selective oxidizer 24. Furthermore, the cooling water pump 26 was controlled so that the temperature was 110°C in the carbon monoxide selective oxidizer 24. In the carbon monoxide selective oxidizer 24, the reaction represented by chemical formula 3 for consuming hydrogen is developed at the same time as the selective oxidation reaction (exothermic reaction) represented by the following chemical formula 2, and the problem of decrease in effective hydrogen for use in the fuel cell is thus caused.

(Chemical Formula 2) 2CO + O₂ → 2CO₂

(Chemical Formula 3) 2H₂ + O₂ → 2H₂O

In each case of the inventive composition A and the comparative composition B, the output of the air pump 25 was controlled so that the carbon monoxide concentration was 5 ppm in the processed gas G2, and thus, depending on the carbon monoxide concentration in the processed gas G1, a difference was produced in the amount of oxygen supplied to the processed gas G1, specifically, as a difference in the power consumption of the air pump 25. Table 1 below shows the results of measuring the power consumption of the air pump 25 for two types of contact time.

**(Table 1)**

| Contact Time | Inventive Composition A | Comparative Composition B |
|---|---|---|
| 8.7 seconds | 0.1 W | 0.4 W |
| 4.4 seconds | 0.7 W | 1.6 W |

When the contact time is longer, the amount of gas is smaller with lower load, and the power consumption is reduced. In particular, in the case of the inventive composition A with the contact time of 8.7 seconds, the conversion rate is very high, thus resulting in an unmeasurable degree of value. Thus, it has been found that the use of the inventive apparatus 1 decreases the combustion of carbon monoxide in the carbon monoxide selective oxidizer 24, and at the same time, also substantially decreases the combustion of hydrogen, and it has been found that a significant contribution is made to an improvement in the power generation efficiency of the fuel cell. In addition, it has been found that the use of the inventive apparatus 1 is fairly effective for the reduction in power consumption even in a situation where the fuel cell is highly loaded (in a situation where the contact time is short). Furthermore, among the devices constituting the polymer electrolyte fuel cell power generation system, in the carbon monoxide selective oxidizer, the direct oxidation reaction (exothermic reaction) is developed on the catalyst, the catalyst lifetime has a limitation, and in order to achieve a lifetime of 40,000 hours or 90,000 hours, there is a need to increase the size of the carbon monoxide selective oxidizer more than necessary. However, the configuration used in combination with the inventive apparatus 1 makes it possible to reduce the size of the carbon monoxide selective oxidizer and lower the cost thereof, because of the extremely reduced reaction amount.

Other embodiments of the inventive apparatus and method will be described below.

(1) While the copper-zinc-based catalyst (Cu/Zn catalyst) and the Pt/CeO₂ catalyst are supposed respectively as the first catalyst and the second catalyst in the embodiment described above, the effect of the present invention can be achieved even in the case of catalysts other than the catalysts given as examples in the embodiment, as long as the first and second catalysts are both carbon monoxide shift conversion catalysts, the first catalyst has the property that the carbon monoxide conversion rate decreases (that is, the property that the catalytic activity decreases due to poisoning with carbon dioxide) with an increase in the carbon dioxide concentration in the supplied reaction gas in the case of the constant carbon monoxide concentration in the supplied reaction gas and the constant reaction temperature, and the first catalyst is combined with the second catalyst such that the degree of decrease in carbon monoxide conversion rate with respect to an increase in the carbon dioxide concentration in the supplied reaction gas in the case of the second catalyst is lower than the degree of decrease in carbon monoxide conversion rate with respect to an increase in the carbon dioxide concentration in the supplied reaction gas in the case of the first catalyst. Even in the case of a catalyst other than the Pt/CeO₂ catalyst as the second catalyst, for example, the same platinum-based catalyst on a support other than ceria (CeO₂) or a noble-metal-based catalyst other than platinum, the effect of the present invention can be achieved when the second catalyst has higher resistance to CO₂ poisoning than the first catalyst. Furthermore, the second catalyst layer 4 may be composed of more than one type of second catalyst provided, for example, in two or more stages, rather than one type of second catalyst.

(2) A case has been described in which the reaction tube 2 for housing the first and second catalyst layers 3, 4 is placed in an electric furnace or a thermostated oven to control the temperature in the reaction tube 2 to a constant temperature, because the first catalyst layer 3 and the second catalyst layer 4 are not more than 5 cc in total in the experimental apparatus for verifying the effect of the present invention. However, the reaction tube 2 may have an adiabatic structure, rather than being placed in an electric furnace or a thermostated oven, and adiabatic control may be carried out for controlling the reaction temperatures of the first catalyst layer 3 and the second catalyst layer 4 concurrently by adjusting the temperature of the reaction gas to be processed, which is fed to the reaction tube 2. The adiabatic control is a temperature control method which is suitable when the inventive apparatus is increased in size with the use of the respective catalysts of the first catalyst layer 3 and second catalyst layer 4 in large amounts in order to increase the treating capacity. In the adiabatic control, the carbon monoxide shift reaction is an exothermic reaction, the reaction temperature in the reaction tube 2 is thus increased downstream, and the rise in temperature is saturated near the equilibrium state. Therefore, while the reaction temperature in the reaction tube 2 is not kept at a constant temperature unlike in the case of the experimental apparatus described above, the reaction gas passing through the first catalyst layer 3 flows into the second catalyst layer 4 at the unchanged temperature. Thus, as for the first catalyst downstream in the first catalyst layer 3 and the second catalyst upstream in the second catalyst layer 4, the situation is the same as in the case of the experimental apparatus. Therefore, even in the case of the respective catalysts in large amounts in the first catalyst layer 3 and the second catalyst layer 4, the effect of the present invention, which is achieved by replacing, with the second catalyst, a portion of the first catalyst poisoned with carbon dioxide in a high CO₂ concentration region downstream in the first catalyst layer 3, is the same as in the case of the experimental apparatus described above.

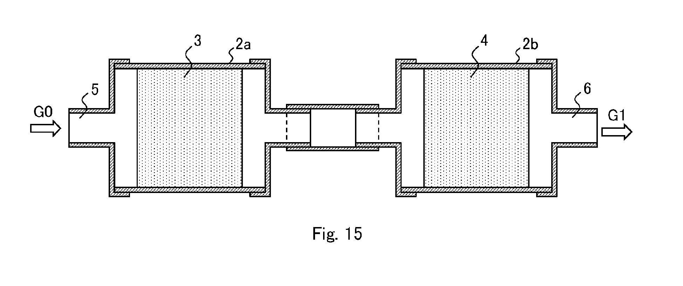

(3) While a case of the first catalyst layer 3 and second catalyst layer 4 formed in the same reaction tube 2 as shown in Fig. 1 is supposed in the embodiment described above, it is also a preferred embodiment to form the first catalyst layer 3 and the second catalyst layer 4 respectively in separate reaction tubes 2a and 2b, and connect the two reaction tubes 2a and 2b in series as shown in Fig. 15. In this case, it is easy to individually control the reaction temperatures in the first catalyst layer 3 and the second catalyst layer 4. Therefore, it is possible to make adjustments to optimum reaction temperatures individually, depending on the carbon monoxide concentrations and carbon dioxide concentrations in gases to be processed, which are respectively injected into the first catalyst layer 3 and the second catalyst layer 4.

(4) While the copper-zinc-based catalyst (Cu/Zn catalyst) and the Pt/CeO₂ catalyst are supposed respectively as the first catalyst and the second catalyst in the embodiment described above, the control carried out for setting the reaction temperature of the downstream second catalyst higher than the reaction temperature of the first catalyst makes it possible to make the degree of decrease in carbon monoxide conversion rate with respect to an increase in the carbon dioxide concentration in the supplied reaction gas in the case of the second catalyst lower than the degree of decrease in carbon monoxide conversion rate with respect to an increase in the carbon dioxide concentration in the supplied reaction gas in the case of the first catalyst, even when the first catalyst and the second catalyst have the same catalyst (for example, a copper-zinc-based catalyst), as long as a configuration (for example, a configuration as shown in Fig. 15) is adopted which is able to control the reaction temperatures independently for the first catalyst layer 3 and the second catalyst layer 4. Thus, the effect of the present invention can be achieved. For example, when the reaction temperature of the upstream first catalyst (copper-zinc-based catalyst) is controlled to 160°C, whereas the reaction temperature of the downstream second catalyst (copper-zinc-based catalyst) is controlled to 200°C or more, the effect can be achieved. This aspect is clear from the experiment results in Fig. 6A, Fig. 7, and Fig. 8. It is found that the CO₂ poisoning of the second catalyst can be suppressed by setting the reaction temperature of the second catalyst higher with an increase in the carbon dioxide concentration in the processed gas after passing through the upstream first catalyst, referring to the experiment results in Fig. 7 and Fig. 8, in the case of using copper-zinc-based catalyst for the first catalyst and the second catalyst. In addition, from the experiment result in Fig. 7, it is found that the CO₂ poisoning is further suppressed by setting the reaction temperature of the second catalyst at a temperature higher than 200°C. It is to be noted that when the first catalyst and the second catalyst are composed of the same catalyst, it is common to set the downstream reaction temperature lower than the upstream reaction temperature, because the lower reaction temperature is advantageous for the conversion of carbon monoxide as described above, according to the conventional equilibrium concept. However, when the catalyst has the property of being poisoned with carbon dioxide as a reaction product, an improvement in carbon monoxide conversion rate can be made, in contrast, when the CO₂ poisoning is suppressed at the expense of making the downstream reaction temperature higher than the upstream reaction temperature.

The experiment for confirming the effect of the other embodiment described above for carrying out the control of setting the reaction temperature of the downstream second catalyst higher than the reaction temperature of the first catalyst was carried out in the following manner. The carbon monoxide concentration in the processed gas G1 was measured for three catalyst layer compositions: inventive compositions E and F using the first catalyst upstream and the second catalyst downstream as in the case of the inventive apparatus 1, for independently controlling the reaction temperatures of the first catalyst and the second catalyst in such a configuration as shown Fig. 14; and a comparative example B entirely using the first catalyst, as for the composition of the catalyst layer in the reaction tube 2. In the three catalyst layer compositions, a copper-zinc-based catalyst was used for the first catalyst. For the second catalyst, the same copper-zinc-based catalyst as the first catalyst was used in the inventive composition E, whereas a Pt/CeO₂ catalyst with the amount of supported platinum of 10 wt% was used in the inventive composition F. Further, Gas #2 was supplied at a flow rate of 83.4 cc/min to the respective compositions mentioned above. The carbon monoxide concentration in the processed gas G1 was 1.88 vol% at the reaction temperature of 160°C in the comparative composition B. In contrast, in the inventive composition E, when the reaction temperature of the first catalyst was adjusted to 160°C as in the case of the comparative composition B, the carbon monoxide concentration in the processed gas G1 was lower than in the case of the comparative composition B, which was 1.45 vol% at the reaction temperature of the second catalyst: 220°C, and 1.33 vol% at reaction temperature of the second catalyst: 250°C. Thus, it has been made clear that, even when the first catalyst and the second catalyst have the same copper-zinc-based catalyst, the carbon monoxide conversion rate is improved by carrying out control for setting the reaction temperature of the downstream second catalyst higher than the reaction temperature of the first catalyst. Furthermore, in the case of the inventive composition F using the Pt/CeO₂ catalyst instead of the copper-zinc-based catalyst as the second catalyst, the carbon monoxide concentration in the processed gas G1 was 1.01 vol% at the reaction temperature of the first catalyst: 160°C and the reaction temperature of the second catalyst: 220°C, which was further decreased from the inventive composition E with the second catalyst of the copper-zinc-based catalyst. This indicates that even when the reaction temperature of the second catalyst is higher than the reaction temperature of the first catalyst, the use of the Pt/CeO₂ catalyst as the second catalyst can make a further improvement in carbon monoxide conversion rate.

### INDUSTRIAL APPLICABILITY

The present invention is able to be applied to an apparatus and a method for carbon monoxide shift conversion, in which carbon monoxide and water vapor contained in a reaction gas are reacted and thereby converted into carbon dioxide and hydrogen, and useful, in particular, for decreasing the carbon monoxide concentration in a reformed gas for use as a fuel source for fuel cells, etc.

## Claims

1. A carbon monoxide shift conversion apparatus in which carbon monoxide and water vapor contained in a reaction gas are reacted and thereby converted into carbon dioxide and hydrogen, wherein
a shift conversion catalyst layer is divided into at least two stages of a upstream side and a downstream side, the upstream side and the downstream side respectively including a first catalyst and a second catalyst,
the first catalyst has a property that a carbon monoxide conversion rate decreases with an increase in carbon dioxide concentration in a supplied reaction gas in the case of a constant carbon monoxide concentration in the supplied reaction gas and a constant reaction temperature, and
the degree of decrease in carbon monoxide conversion rate with respect to an increase in carbon dioxide concentration in the supplied reaction gas in the case of the second catalyst is lower than the degree of decrease in carbon monoxide conversion rate with respect to an increase in carbon dioxide concentration in the supplied reaction gas in the case of the first catalyst.

2. The carbon monoxide shift conversion apparatus according to claim 1, wherein the first catalyst is a copper-zinc-based catalyst, and the second catalyst is a noble-metal-based catalyst.

3. The carbon monoxide shift conversion apparatus according to claim 2, wherein the second catalyst is a platinum-based catalyst, and the second catalyst has a cerium oxide as a support.

4. The carbon monoxide shift conversion apparatus according to claim 2 or 3, wherein the second catalyst is not more than the first catalyst in volume.

5. The carbon monoxide shift conversion apparatus according to any one of claims 1 to 4, wherein reaction temperatures of the first catalyst and of the second catalyst are controlled concurrently.

6. The carbon monoxide shift conversion apparatus according to any one of claims 1 to 4, wherein reaction temperatures of the first catalyst and of the second catalyst are controlled independently from each other.

7. The carbon monoxide shift conversion apparatus according to claim 1, wherein
when the first catalyst and the second catalyst have a same composition and a same structure, respective reaction temperatures of the first catalyst and the second catalyst are controlled independently from each other so that the degree of decrease in carbon monoxide conversion rate with respect to an increase in carbon dioxide concentration in the supplied reaction gas in the case of the second catalyst is lower than the degree of decrease in carbon monoxide conversion rate with respect to an increase in carbon dioxide concentration in the supplied reaction gas in the case of the first catalyst.

8. The carbon monoxide shift conversion apparatus according to claim 7, wherein the first catalyst and the second catalyst are copper-zinc-based catalysts.

9. A method of carbon monoxide shift conversion for reacting carbon monoxide and water vapor contained in a reaction gas and converting them into carbon dioxide and hydrogen, wherein
a shift reaction step is divided into at least two continuous shift reaction steps, where a first catalyst is used upstream in a first shift conversion step, whereas a second catalyst is used downstream in a second shift reaction step,
the first catalyst has a property that a carbon monoxide conversion rate decreases with an increase in carbon dioxide concentration in a supplied reaction gas in the case of a constant carbon monoxide concentration in the supplied reaction gas and a constant reaction temperature, and
the degree of decrease in carbon monoxide conversion rate with respect to an increase in carbon dioxide concentration in the supplied reaction gas in the case of the second catalyst is lower than the degree of decrease in carbon monoxide conversion rate with respect to an increase in carbon dioxide concentration in the supplied reaction gas in the case of the first catalyst.

10. The method of carbon monoxide shift conversion according to claim 9, wherein the first catalyst is a copper-zinc-based catalyst, and the second catalyst is a noble-metal-based catalyst.

11. The method of carbon monoxide shift conversion according to claim 10, wherein the second catalyst is a platinum-based catalyst, and the second catalyst has a cerium oxide as a support.

12. The method of carbon monoxide shift conversion according to claim 10 or 11, wherein the second catalyst is not more than the first catalyst in volume.

13. The method of carbon monoxide shift conversion according to any one of claims 9 to 12, wherein a reaction gas passing through the first catalyst is fed to the second catalyst without being subjected to temperature control.

14. The method of carbon monoxide shift conversion according to any one of claims 9 to 12, wherein reaction temperatures of the first catalyst and of the second catalyst are controlled independently from each other.

15. The method of carbon monoxide shift conversion according to claim 9, wherein
when the first catalyst and the second catalyst have a same composition and a same structure, respective reaction temperatures of the first catalyst and the second catalyst are controlled independently from each other so that the degree of decrease in carbon monoxide conversion rate with respect to an increase in carbon dioxide concentration in the supplied reaction gas in the case of the second catalyst is lower than the degree of decrease in carbon monoxide conversion rate with respect to an increase in carbon dioxide concentration in the supplied reaction gas in the case of the first catalyst.

16. The method of carbon monoxide shift conversion according to claim 15, wherein the first catalyst and the second catalyst are copper-zinc-based catalysts.

17. A hydrogen production apparatus comprising:
the carbon monoxide shift conversion apparatus according to any one of claims 1 to 8; and
a carbon monoxide selective oxidizer for decreasing, by selective oxidation, a carbon monoxide concentration in a gas processed by the carbon monoxide shift conversion apparatus.
